# EUROPEAN PATENT APPLICATION

(11) **EP 4 629 304 A2**
(43) Date of publication of application: **08.10.2025**
(21) Application number: 25167802.5
(22) Date of filing: 01.04.2025
(51) Int. Cl.: H01M 4/04, H01M 4/139, H01M 10/052, H01M 10/0562, H01M 10/0587, H01M 10/48

(54) **APPARATUS FOR MANUFACTURING DRY ELECTRODE, METHOD FOR MANUFACTURING DRY ELECTRODE, AND DRY ELECTRODE MANUFACTURED THEREBY**

(30) Priority: 05.04.2024 KR 20240046477
(71) Applicant: SAMSUNG SDI CO., LTD., Yongin-si, Gyeonggi-do 17084 (KR)
(72) Inventor: LEE, Gaeon, 17084 Yongin-si, Gyeonggi-do (KR); LEE, Jinhyon, 17084 Yongin-si, Gyeonggi-do (KR); KWON, Ilkyong, 17084 Yongin-si, Gyeonggi-do (KR); CHOE, Yunju, 17084 Yongin-si, Gyeonggi-do (KR); CHOI, Jongsup, 17084 Yongin-si, Gyeonggi-do (KR)
(74) Representative: Gulde & Partner

(57) **Abstract**

An apparatus for manufacturing a dry electrode, a method for manufacturing a dry electrode, and a dry electrode manufactured thereby are disclosed. The apparatus includes: a dry mixture supply part, a dry binder, and a dry conductive material, where the dry mixture supply part includes a feeding shutter configured to adjust a width of an opening through which the dry mixture is supplied; an extrusion part configured to form an electrode active material layer including a first coated portion, a second coated portion, and a third coated portion including a film formed from the dry mixture, where the electrode active material layer further includes an uncoated portion, which is an empty area and defined between the first coated portion and the third coated portion; a lamination part configured to laminate the electrode active material layer on an electrode current collector; and a sensor part configured to recognize the uncoated portion.

## Description

### BACKGROUND

### 1. Field

One or more embodiments of the present disclosure relate to an apparatus for manufacturing a dry electrode, a method for manufacturing a dry electrode, and a dry electrode manufactured thereby.

### 2. Description of the Related Art

Industrial demands have led to the active development of batteries that emphasize both high energy density and safety. For example, rechargeable lithium batteries offer practical applications in a variety of fields, including automotive technologies and information-related devices, such as communication equipment. Safety is particularly crucial in the automotive field due to its direct impact on human life and well-being.

All-solid-state batteries, which use a solid electrolyte instead of an electrolyte solution, have been proposed. All-solid-state batteries eliminate the use a flammable organic dispersion medium, significantly decreasing the likelihood of fire or an explosion in the event of a short circuit. Thus, such all-solid-state batteries may offer a significant safety advantage over the rechargeable lithium batteries with an electrolyte solution.

### SUMMARY

The invention is defined by the appended claims. The description that follows is subjected to this limitation. Any disclosure lying outside the scope of said claims is only intended for illustrative as well as comparative purposes.

One or more aspects of embodiments of the present disclosure are directed toward an apparatus for manufacturing a dry electrode and a method for manufacturing the dry electrode, which freely change a width of an uncoated portion.

One or more aspects of embodiments of the present disclosure are directed toward a dry electrode that minimizes or reduces an area of an uncoated portion and is improved in capacity and energy density.

According to one or more embodiments of the present disclosure, an apparatus for manufacturing a dry electrode includes: a dry mixture supply part configured to supply a dry mixture including an electrode active material, a dry binder, and a dry conductive material, wherein the dry mixture supply part includes a feeding shutter configured to adjust a width of an opening through which the dry mixture is supplied; an extrusion part configured to form an electrode active material layer including a first coated portion, a second coated portion, and a third coated portion including a film formed from the dry mixture, wherein the electrode active material layer further includes an uncoated portion, which is an empty area and defined between the first coated portion and the third coated portion; a lamination part configured to laminate the electrode active material layer on an electrode current collector; and a sensor part configured to recognize the uncoated portion, wherein the uncoated portion is adjacent to one side of the second coated portion, and the uncoated portion and the second coated portion are between the first coated portion and the third coated portion.

According to one or more embodiments of the present disclosure, a method for manufacturing a dry electrode includes: mixing an electrode active material, a dry binder, and a dry conductive material to form a dry mixture; alternately supplying the dry mixture at a first supply amount and a second supply amount, wherein the first supply amount may be greater than the second supply amount; forming a film from the dry mixture to form an electrode active material layer including a first coated portion, a second coated portion, and a third coated portion, wherein the electrode active material layer further includes an uncoated portion, which is an empty area and defined between the first coated portion and the third coated portion; laminating the electrode active material layer on an electrode current collector; recognizing the uncoated portion; and adjusting a supply amount of dry mixture, wherein the uncoated portion is adjacent to one side of the second coated portion, and the uncoated portion and the second coated portion are between the first coated portion and the third coated portion.

According to one or more embodiments of the present disclosure, a dry electrode includes: an electrode current collector; and an electrode active material layer on the electrode current collector, wherein the electrode active material layer includes an electrode active material, a dry binder, and a dry conductive material, the electrode active material layer includes a first coated portion, a second coated portion, and a third coated portion, the electrode active material layer further includes an uncoated portion, which is an empty area and defined between the first coated portion and the third coated portion, the uncoated portion is adjacent to one side of the second coated portion, and the uncoated portion and the second coated portion are between the first coated portion and the third coated portion.

### BRIEF DESCRIPTION OF THE DRAWINGS

The accompanying drawings are included to provide a further understanding of the subject matter of the present disclosure and are incorporated in and constitute a part of this specification. The drawings illustrate embodiments of the present disclosure and, together with the description, serve to explain principles of the one or more embodiments of the present disclosure. In the drawings:
FIG. 1 is a schematic conceptual view of a rechargeable lithium battery according to one or more embodiments of the present disclosure;
FIGS. 2-5 each is a schematic cross-sectional view of a rechargeable lithium battery according to one or more embodiments of the present disclosure;
FIG. 6 is a cross-sectional view of an all-solid-state battery according to one or more embodiments of the present disclosure;
FIG. 7 is a perspective view of an electrode active material layer according to one or more embodiments of the present disclosure;
FIGS. 8-10 each is an enlarged view illustrating an area A of the electrode active material layer according to one or more embodiments of the present disclosure;
FIGS. 11-12 each is a cross-sectional view illustrating a positive electrode active material layer and a negative electrode active material layer according to one or more embodiments of the present disclosure;
FIG. 13 is a flowchart illustrating a method for manufacturing a dry electrode according to one or more embodiments of the present disclosure;
FIGS. 14-17 each is a perspective view illustrating embodiments of the manufacturing method; and
FIGS. 18-19 each is a schematic view illustrating an apparatus for manufacturing a dry electrode according to one or more embodiments of the present disclosure.

### DETAILED DESCRIPTION

In order to sufficiently understand the configuration and effect of the present invention, some embodiments of the present invention will be described with reference to the accompanying drawings. It should be noted, however, that the present invention is not limited to the following exemplary embodiments, and may be implemented in various forms. Rather, the exemplary embodiments are provided only to disclose the present invention and let those skilled in the art fully know the scope of the present invention.

In this description, it will be understood that, when an element is referred to as being on another element, the element can be directly on the other element or intervening elements may be present between therebetween. In the drawings, thicknesses of some components are exaggerated for effectively explaining the technical contents. Like reference numerals refer to like elements throughout the specification.

Unless otherwise specially noted in the present disclosure, the singular forms "a," "an," and "the" are intended to include the plural forms as well, unless the context clearly indicates otherwise. Further, the utilization of "may" when describing embodiments of the present disclosure refers to "one or more embodiments of the present disclosure". In addition, unless otherwise specially noted, the phrase "A or B" or "A and/or B" or "A/B" may indicate "A but not B", "B but not A", and "A and B". The terms "comprises/includes" and/or "comprising/including" used in the disclosure do not exclude the presence or addition of one or more other components.

As used herein, the term "combination thereof" may refer to a mixture, a stack, a composite, a copolymer, an alloy, a blend, or a reaction product of the constituents.

In the present disclosure, expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

In the context of the present disclosure and unless otherwise defined, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Unless otherwise specially noted in this description, the expression of singular form may include the expression of plural form. In addition, unless otherwise specially noted, the phrase "A or B" may indicate "A but not B", "B but not A", and "A and B". The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter (D50) where a cumulative volume is about 50 volume % in a particle size distribution. The average particle diameter (D50) may be measured by a method widely known to those skilled in the art, for example, by a particle size analyzer, a transmission electron microscope image, or a scanning electron microscope image. Alternatively, a dynamic light-scattering measurement device is used to perform a data analysis, the number of particles is counted for each particle size range, and then from this, the average particle diameter (D50) value may be obtained through a calculation. Dissimilarly, a laser scattering method may be utilized to measure the average particle diameter (D50). In the laser scattering method, a target particle is distributed in a distribution solvent, introduced into a laser scattering particle-diameter measurement device (e.g., MT3000 commercially available from Microtrac, Inc), irradiated with ultrasonic waves of 28 kHz at a power of 60 W, and then an average particle diameter (D50) is calculated in the 50% standard of particle diameter distribution in the measurement device.

The term "dry electrode" or "dry electrode film", utilized herein, refers to an electrode or electrode film comprising an electrode active material layer that does not include a solvent or intentionally does not utilize a solvent in the electrode preparation process. Solvents include process solvents, process solvent residues, process solvent impurities, and/or the like.

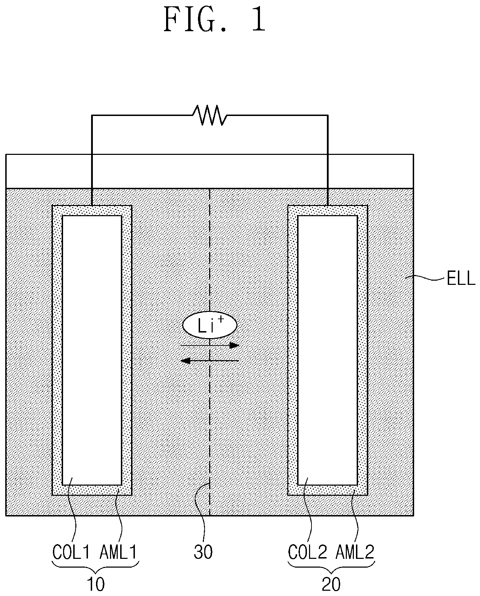

FIG. 1 is a schematic conceptual view of a rechargeable lithium battery according to embodiments of the present invention. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be a medium by which lithium ions are transferred between the positive electrode 10 and the negative electrode 20. In the electrolyte ELL, the lithium ions may move through the separator 30 toward one of the positive electrode 10 and the negative electrode 20.

### Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material and further include a binder and/or a conductive material.

For example, the positive electrode 10 may further include an additive that can serve as a sacrificial positive electrode.

An amount of the positive electrode active material may range from about 90 wt% to about 99.5 wt% or about 90 wt% to about 99 wt% based on 100 wt% of the positive electrode active material layer AML1. Amounts of the binder and the conductive material may be about 0.5 wt% to about 5 wt% based on 100 wt% of the positive electrode active material layer AML1.

The binder may serve to improve attachment of positive electrode active material particles to each other and also to improve attachment of the positive electrode active material to the current collector COL1. The binder may include, for example, polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present invention is not limited thereto.

The conductive material may be used to provide an electrode with conductivity, and any suitable conductive material without causing chemical change of a battery may be used as the conductive material to constitute the battery. The conductive material may include, for example, a carbon-based material such as natural graphite, artificial graphite, carbon black, acetylene black, Ketjenblack, carbon fiber, carbon nano-fiber, and carbon nano-tube; a metal powder or metal fiber containing one or more of copper, nickel, aluminum, and silver; a conductive polymer such as a polyphenylene derivative; or a mixture thereof.

Al may be used as the current collector COL1, but the present invention is not limited thereto.

### Positive Electrode Active Material

The positive electrode active material in the positive electrode active material layer AML1 may include a compound (e.g., lithiated intercalation compound) that can reversibly intercalate and de-intercalate lithium. For example, the positive electrode active material may include at least one kind of composite oxide including lithium and metal that is selected from cobalt, manganese, nickel, and a combination thereof.

The composite oxide may include lithium transition metal composite oxide, for example, lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one of chemical formula below. LiₐA_{1-bXbO2-cDc} (0.90≤a≤1.8, 0≤b≤0.5, 0≤c≤0.05); LiₐMn_{2-bXbO4-cDc} (0.90≤a≤1.8, 0≤b≤0.5, 0≤c≤0.05); LiₐNi_{1-b-cCobXcO2-αDα} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L1_{d}GeO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1 ); LiₐCoG_{b}O₂ (0.90≤a≤1.8, 0.001≤b≤0.1 ); LiₐMn_{1-b}G_{b}O₂ (0.90≤a≤1.8, 0.001≤b≤0.1 ); LiₐMn₂G_{b}O₄ (0.90≤a≤1.8, 0.001≤b≤0.1 ); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the chemical formula above, A is Ni, Co, Mn, or a combination thereof, X is Al, Ni, Co, Mn, Cr, Fe, Mg, Sr, V, a rare element, or a combination thereof, D is O, F, S, P, or a combination thereof, G is Al, Cr, Mn, Fe, Mg, La, Ce, Sr, V, or a combination thereof, and L1 is Mn, Al, or a combination thereof.

For example, the positive electrode active material may be a high nickel-based positive electrode active material having a nickel content of equal to or greater than about 80 mol%, equal to or greater than about 85 mol%, equal to or greater than about 90 mol%, equal to or greater than about 91 mol%, or equal to or greater than about 94 mol% and equal to or less than about 99 mol% based on 100 mol% of metal devoid of lithium in the lithium transition metal composite oxide. The high nickel-based positive electrode active material may achieve high capacity and thus may be applied to a high-capacity and high-density rechargeable lithium battery.

### Negative Electrode 20

The negative electrode 20 for a rechargeable lithium battery may include a current collector COL2 and a negative electrode active material layer AML2 positioned on the current collector COL2. The negative electrode active material layer AML2 may include a negative electrode active material and may further include a binder and/or a conductive material.

For example, the negative electrode active material layer AML2 may include a negative electrode active material of about 90 wt% to about 99 wt%, a binder of about 0.5 wt% to about 5 wt%, and a conductive material of about 0 wt% to about 5 wt% or about 0.5 wt% to about 5 wt%, based on 100 wt% of a total weight of the negative electrode active material layer.

The binder may serve to improve attachment of negative electrode active material particles to each other and also to improve attachment of the negative electrode active material to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is used as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include Na, K, or Li.

The dry binder may include a fibrillizable polymer material, for example, polytetrafluoroethylene, polyvinylidene fluoride, polyvinylidene fluoride-hexafluoropropylene copolymer, polyethylene oxide, or a combination thereof.

The conductive material may be used to provide an electrode with conductivity, and any suitable conductive material without causing chemical change of a battery may be used as the conductive material to constitute the battery. For example, the conductive material may include a carbon-based material such as natural graphite, artificial graphite, carbon black, acetylene black, Ketjenblack, carbon fiber, carbon nano-fiber, and carbon nano-tube; a metal powder or metal fiber including one or more of copper, nickel, aluminum, and silver; a conductive polymer such as a polyphenylene derivative; or a mixture thereof.

The current collector COL2 may include a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 may include a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as non-shaped, sheet-shaped, flake-shaped, sphere-shaped, or fiber-shaped natural or artificial graphite, and the amorphous carbon may include soft carbon, hard carbon, mesophase pitch carbon, or calcined coke.

The lithium metal alloy may include an alloy of lithium and metal that is selected from Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include silicon, silicon-carbon composite, SiOx (0<x<2), Si-Q alloy (where Q is alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include Sn, SnO2, a Sn-based alloy, a combination thereof.

The silicon-carbon composite may be a composite of silicon and amorphous carbon. According to an embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon first coating layer (shell) positioned on a surface of the secondary particle. The amorphous carbon may also be positioned between the primary silicon particles, and for example, the primary silicon particles may be coated with the amorphous carbon. The secondary particles may be present dispersed in an amorphous carbon matrix.

The silicon-carbon composite may further include crystalline carbon. For example, the silicon-carbon composite may include a core including crystalline carbon and silicon particles and an amorphous carbon first coating layer positioned on a surface of the core.

The Si-based negative electrode active material or the Sn-based negative electrode active material may be used in combination with a carbon-based negative electrode active material.

### Separator 30

Based on type of the rechargeable lithium battery, the separator 30 may be present between positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer positioned on one or opposite surfaces of the porous substrate, which the coating layer may include an organic material, an inorganic material, or a combination thereof.

The porous substrate may be a layer including one selected from polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be a copolymer or mixture including two or more of the materials mentioned above.

The organic material may include a polyvinylidenefluoride-based copolymer or a (meth)acrylic copolymer.

The inorganic material may include an inorganic particle selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, or a combination thereof, but the present invention is not limited thereto.

The organic material and the inorganic material may be present mixed in one coating layer or may be present as a stack of a coating layer including the organic material and a coating layer including an inorganic material.

### Electrolyte ELL

The electrolyte ELL for a rechargeable lithium battery may include a non-aqueous organic solvent and a lithium salt.

The non-aqueous organic solvent may serve as a medium for transmitting ions that participate in an electrochemical reaction of a battery.

The non-aqueous organic solvent may include a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, or caprolactone.

The ether-based solvent may include dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include ethyl alcohol or isopropyl alcohol. The aprotic solvent may include nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be used alone or in a mixture of two or more substances.

In addition, when a carbonate-based solvent is used, a cyclic carbonate and a chain carbonate may be mixed and used, and the cyclic carbonate and the chain carbonate may be mixed in a volume ratio of about 1:1 to about 1:9.

The lithium salt may be a material that is dissolved in the non-aqueous organic solvent to serve as a supply source of lithium ions in a battery and plays a role in enabling a basic operation of a rechargeable lithium battery and in promoting the movement of lithium ions between positive and negative electrodes. The lithium salt may include, for example, at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)2N, lithium bis(fluorosulfonyl)imide (LiFSI), LiC₄F₉SO₃, LiN(CₓF₂ₓ₊₁SO₂)(C_{y}F_{2y+1}SO²) (where x and y are integers between 1 to 20), lithium trifluoromethane sulfonate, lithium tetrafluoroethanesulfonate, lithium difluorobis(oxalato)phosphate (LiDFOB), and lithium bis(oxalato) borate (LiBOB).

### Rechargeable Lithium Battery

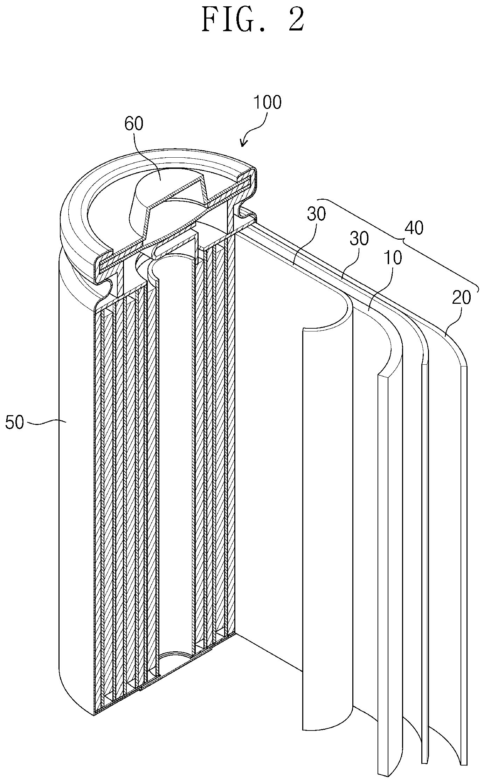

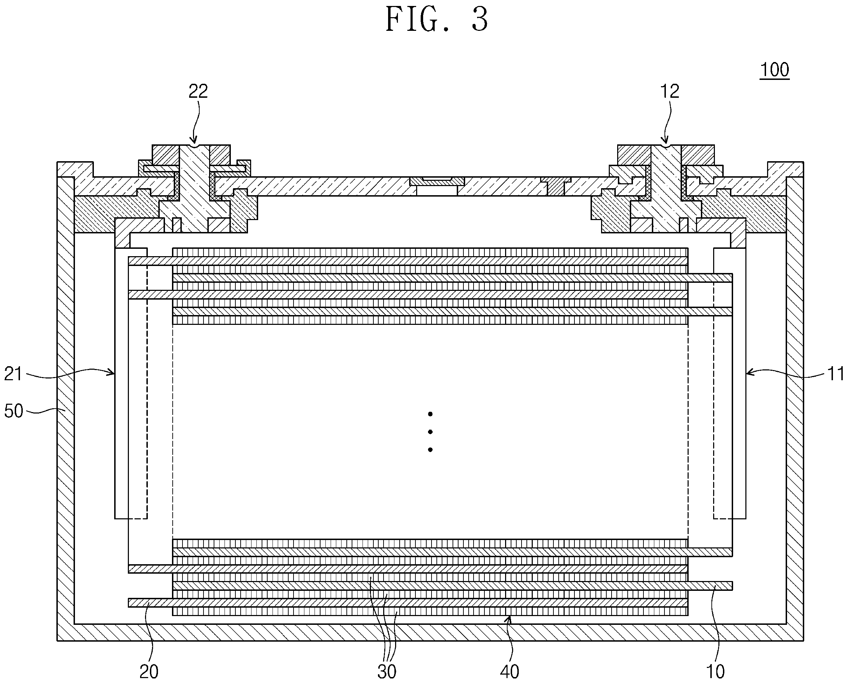

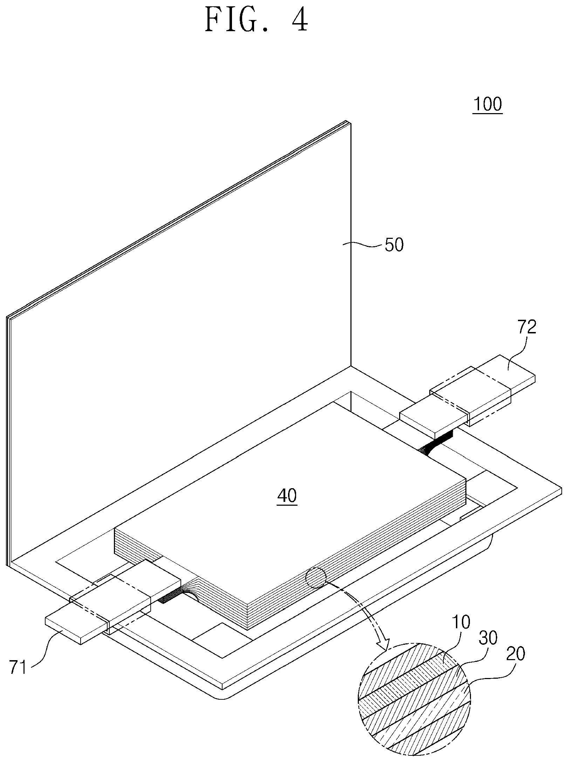

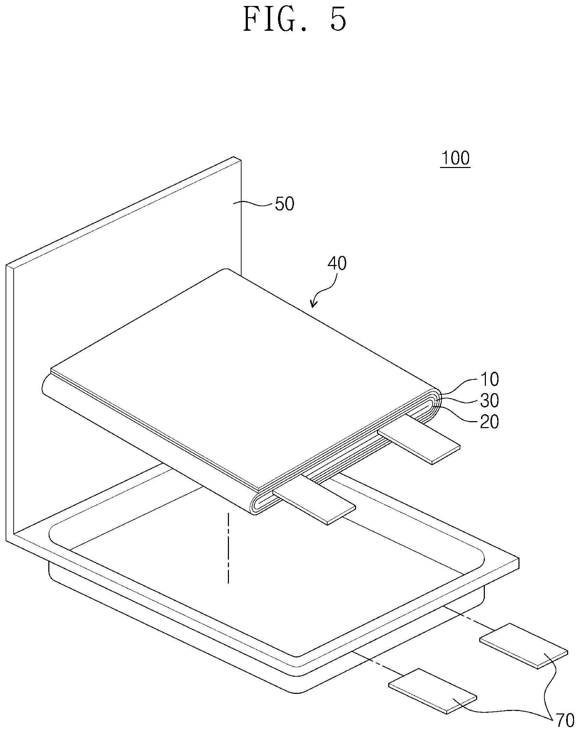

Based on shape of a rechargeable lithium battery, the rechargeable lithium battery may be classified into cylindrical, prismatic, pouch, and coin types. In FIGS. 2 to 5 illustrating simplified diagrams showing a rechargeable lithium battery according to an embodiment, FIG. 2 shows a cylindrical battery, FIG. 3 shows a prismatic battery, and FIGS. 4 and 5 show pouch-type batteries. Referring to FIGS. 2 to 5, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70, i.e., a positive electrode tab 71 and a negative electrode tab 72, which serves as an electrical path for externally inducing a current generated in the electrode assembly 40.

A rechargeable lithium battery according to an embodiment of the present invention may be applied to automotive vehicles, mobile phones, and/or any other electrical devices, but the present invention is not limited thereto.

### All-solid-state Battery

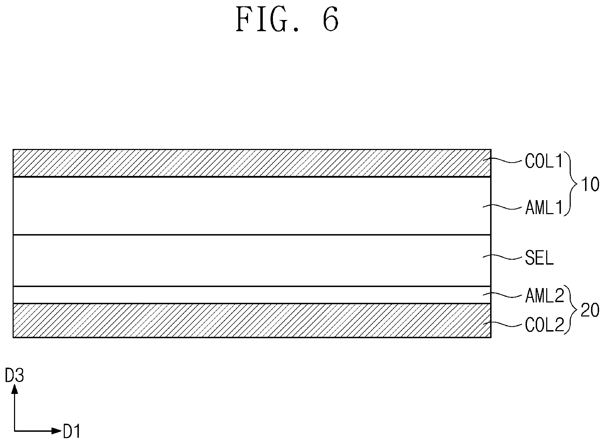

FIG. 6 is a cross-sectional view of an all-solid-state battery according to one or more embodiments of the present disclosure. In some embodiments, the rechargeable lithium battery may be an all-solid-state battery.

A positive electrode active material layer AML1 may further include a solid electrolyte. The solid electrolyte may include a sulfide-based solid electrolyte having excellent or suitable lithium ion conductivity. The sulfide-based solid electrolyte may, for example, include at least one selected from among Li₂S-P₂S₅, Li₂S-P₂S₅-LiX (X is a halogen element), Li₂S-P₂S₅-Li₂O, Li₂S-P₂S₅-Li₂O-LiI, Li₂S-SiS₂, Li₂S-SiS₂-LiI, Li₂S - SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, and "Z" is at least one selected from among Ge, Zn, and Ga), Li₂S-GeS₂, Li₂S-SiS₂-Li₃PO₄, Li₂S-SiS₂-LiₚMO_{q} (p and q are positive numbers, and "M" is at least one selected from among P, Si, Ge, B, Al, and Ga), Li₇₋ₓPS₆₋ₓClₓ (0≤x≤2), Li₇₋ₓPS₆₋ₓBrₓ (0≤x≤2), and Li₇₋ₓPS₆₋xIₓ (0≤x≤2).

The sulfide-based solid electrolyte may be, for example, an argyrodite-type or kind compound containing one or more selected from among L_{i7-X}PS_{6-X}Cl_{X} (0≤x≤2), Li_{7-X}PS_{6-X}Br_{X} (0≤x≤2), and Li_{7-X}PS_{6-X}I_{X} (0≤x≤2). In some embodiments, the sulfide-based solid electrolyte may be an argyrodite-type or kind compound containing one or more selected from among LI₆PS₅Cl, Li₆PS₅Br, and Li₆PS₅I.

In some embodiments, the sulfide-based solid electrolyte may be a compound of argyrodite-type or kind including Li₇₋ₐMₐPS_{6-c}X_{c} (where 0≤a≤2 and 0≤c≤2). In the foregoing chemical formula, X may be F, Br, Cl and/or a (e.g., any suitable) combination thereof. M may be scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (TI), silicon (Si), germanium (Ge), tin (Sn), lead (Pb), arsenic (As), antimony (Sb), bismuth (Bi), and/or a (e.g., any suitable) combination thereof.

The argyrodite-type or kind solid electrolyte may have a density of about 1.5 g/cc to about 2.0 g/cc. The argyrodite-type or kind solid electrolyte may have a density of about 1.5 g/cc or more to reduce internal resistance (e.g., internal electrical resistance) of the all-solid-state battery and prevent defects (or reduce a degree or occurrence of defects), such as penetration and short circuit of the solid electrolyte layer from occurring due to formation of lithium dendrites. An elastic coefficient of the solid electrolyte may be, for example, about 15 GPa to about 35 GPa.

The solid electrolyte contained in the positive electrode active material layer AML1 may have an average particle diameter (D50) less than that of the solid electrolyte contained in the solid electrolyte layer SEL. For example, the average particle diameter (D50) of the solid electrolyte contained the positive electrode active material layer AML1 may be about 90% or less, about 80% or less, about 70% or less, about 60% or less, about 50% or less, about 40% or less, about 30% or less, or about 20% or less of the average particle diameter (D50) of the solid electrolyte contained in the solid electrolyte layer SEL. The average particle diameter (D50) may be a median diameter measured using a laser particle size distribution system.

The all-solid-state battery according to one or more embodiments of the present disclosure may include a solid electrolyte layer SEL instead of the electrolyte solution ELL. The solid electrolyte layer SEL may include a solid electrolyte, for example, a sulfide-based solid electrolyte. The sulfide-based solid electrolyte may be prepared, for example, by processing starting materials, such as Li₂S and/or P₂S₅, through a molten metal cooling method and/or mechanical milling method. In some embodiments, after this processing, heat processing may be performed. The solid electrolyte may be amorphous, crystalline, or a mixture thereof. In some embodiments, the solid electrolyte may include, for example, at least sulfur (S), phosphorus (P), and lithium (Li) as a component of the sulfide-based solid electrolyte material disclosed above. For example, the solid electrolyte may be a material including Li₂S-P₂S₅. If (e.g., when) Li₂S-P₂S₅ is used as the sulfide-based solid electrolyte material that forms the solid electrolyte, a mixed molar ratio of Li₂S and P₂S₅ may be, for example, Li₂S: P2S5 = 50: 50 to 90: 10.

The sulfide-based solid electrolyte may be, for example, an argyrodite-type or kind compound containing one or more selected from among Li_{7-X}PS_{6-X}Cl_{X} (0≤x≤2), Li_{7-X}PS_{6-X}Br_{X} (0≤x≤2), and Li_{7-X}PS_{6-X}I_{X} (0≤x≤2).In some embodiments, the sulfide-based solid electrolyte may be an argyrodite-type or kind compound containing one or more selected from among Li₆PS₅Cl, Li₆PS₅Br, and Li₆PS₅I.

In some embodiments, the sulfide-based solid electrolyte may be a compound of argyrodite-type or kind including Li₇₋ₐMₐPS_{6-c}X_{c} (where 0≤a≤2 and 0≤c≤2). In the foregoing chemical formula, X may be F, Br, Cl and/or a (e.g., any suitable) combination thereof. M may be scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (TI), silicon (Si), germanium (Ge), tin (Sn), lead (Pb), arsenic (As), antimony (Sb), bismuth (Bi), and/or a (e.g., any suitable) combination thereof.

The argyrodite-type or kind solid electrolyte may have a density of about 1.5 g/cc to about 2.0 g/cc. The argyrodite-type or kind solid electrolyte may have a density of about 1.5 g/cc or more to reduce internal resistance (e.g., electrical resistance) of the all-solid-state battery and prevent defects (or reduce a degree or occurrence of such defects), such as penetration and short circuit of the solid electrolyte layer, from occurring due to formation of lithium dendrites. An elastic coefficient of the solid electrolyte may be, for example, about 15 GPa to about 35 GPa.

The solid electrolyte layer SEL may further include a binder. The binder contained in the solid electrolyte layer SEL may be, for example, a styrene butadiene rubber (SBR), polytetrafluoroethylene (PTFE), polyvinylidene fluoride, and polyethylene, but embodiments of the present disclosure are not limited thereto. The binder of the solid electrolyte layer SEL may be equal to or different from the binder contained in the positive electrode active material layer AML1 or the binder contained in the negative electrode active material layer AML2.

### Dry Electrode

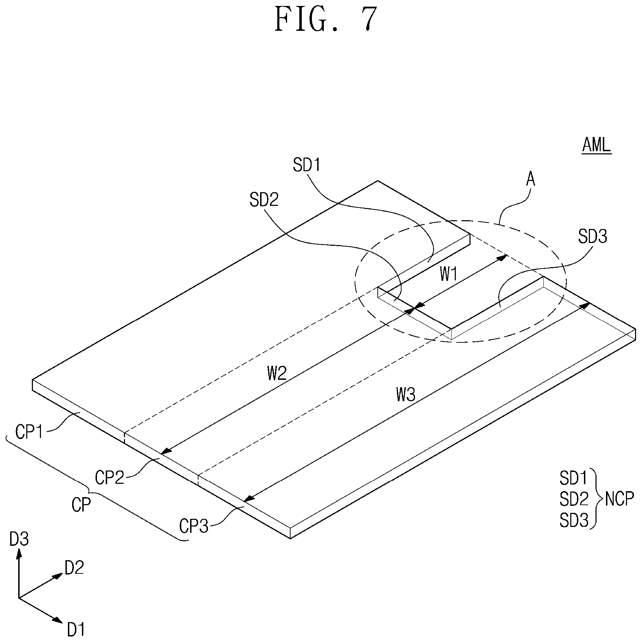

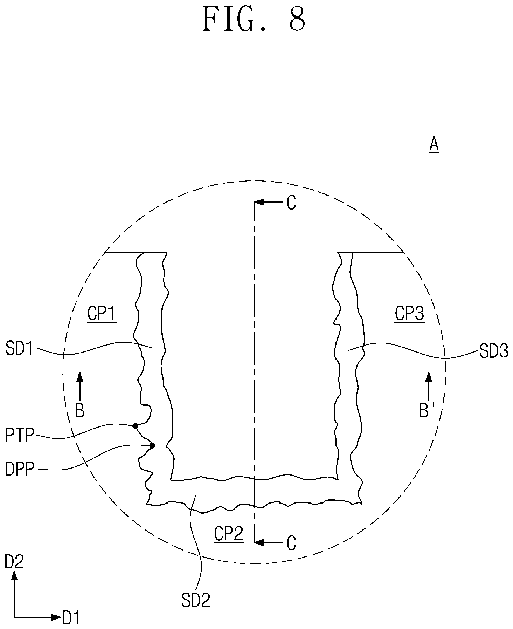

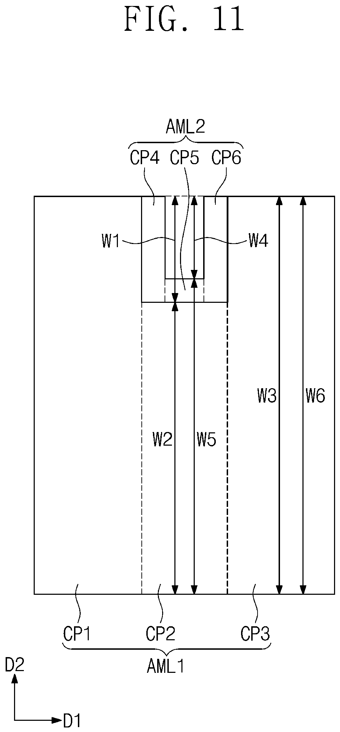

FIG. 7 is a perspective view of an electrode active material layer AML of a dry electrode (positive electrode 10 or negative electrode 20) according to one or more embodiments of the present disclosure. In FIGS. 8-10, each is an enlarged view illustrating an area A of the electrode active material layer. In FIGS. 11-12, each is a cross-sectional view for explaining a positive electrode active material layer AML1 and a negative electrode active material layer AML2 according to one or more embodiments of the present disclosure. Hereinafter, for the convenience of explanation, the description of the same matters as disclosed by reference to FIG. 1 may not be repeated, and differences are described in more detail.

Referring to FIG. 7, the electrode active material layer AML of the dry electrode according to one or more embodiments of the present disclosure may include a coated portion CP and an uncoated portion NCP. The coated portion CP may be a portion on which a mixture is applied. The uncoated portion NCP may be a portion on which an electrode current collector is exposed because the mixture is not applied. A tab may be attached to the uncoated portion NCP. According to one or more embodiments of the present disclosure, the mixture may include an electrode active material, a dry binder, and a dry conductive material (e.g., a dry electrically conductive material).

The coated portion CP may include a plurality of coated portions. As an example, the coated portion CP may include a first coated portion CP1, a second coated portion CP2, and a third coated portion CP3. The second coated portion CP2 may be between the first coated portion CP1 and the third coated portion CP3. For example, each of the first coated portion CP1 to the third coated portion CP3 (e.g., CP1, CP2, and/or CP3) may include a plurality of first, second, and third coated portions.

The uncoated portion NCP may be an empty area defined between the first coated portion CP1 and the third coated portion CP3. As an example, the uncoated portion NCP may be adjacent to one side of the second coated portion CP2. For example, the uncoated portion NCP may be between the first coated portion CP1 and the third coated portion CP3. As an example, the uncoated portion NCP may include a plurality of uncoated portions. Each of the plurality of uncoated portions may be between the first coated portion CP1 and the third coated portion CP3 and may be adjacent to one side of the second coated portion CP2. The uncoated portion NCP is adjacent to one side of the second coated portion CP2 in a transverse direction (TD).

The uncoated portion NCP may have a first width W1 in a transverse direction TD. For example, the uncoated portion may have a first width W1 in a second direction D2. In some embodiments, each of the transverse direction TD or the second direction D2 may be a direction perpendicular to a direction in which a roll is wound in the process of manufacturing the dry electrode.

The first width W1 may be a length that is enough to attach the tab. For example, the first width W1 may be substantially the same as the length of the tab to be attached. The 'substantially the same length' may be defined by a width of the uncoated portion NCP, which may be within about 10% of the width of the tab.

The second coated portion CP2 may have a second width W2 in the transverse direction TD. For example, the second coated portion CP2 may have a second width W2 in a second direction D2. In some embodiments, the second coated portion CP2 may be provided on an area between the first coated portion CP1 and the third coated portion CP3 except for the uncoated portion. As a result, an electrode active layer AML without the uncoated portion NCP except for the portion to which the tap is attached may be provided.

The first coated portion CP1 may have a third width W3 in the transverse direction TD. For example, the first coated portion CP1 may have a third width W3 in the second direction D2.

The third coated portion CP3 may have a third width W3 in the transverse direction TD. For example, the third coated portion CP3 may have a third width W3 in the second direction D2.

The third width W3 may be the sum of the first width W1 and the second width W2.

Referring to FIGS. 7-8, the uncoated portion NCP may be defined by a first side surface SD1, a second side surface SD2, and a third side surface SD3. In some embodiments, the uncoated portion NCP may be an empty area defined between the first side surface SD1 and third side surface SD3.

For example, the first side surface SD1 may be provided in the second direction D2. The first coated portion CP1 may have the first side surface SD1. For example, the second side surface SD2 may be provided in the first direction D1. The second coated portion CP2 may have the second side surface SD2. For example, the third side surface SD3 may be provided in the second direction D2. The third coated portion CP3 may have the third side surface SD3.

At least one of the first side surface SD1, the second side surface SD2, or the third side surface SD3 may include an unevenness (e.g., may be an uneven surface). In some embodiments, at least one of the first side surface SD1, the second side surface SD2, or the third side surface SD3 may have an uneven surface. For example, at least one of the first side surface SD1, the second side surface SD2, or the third side surface SD3 may include a protruding portion PTP and a recessed portion DPP. For example, a distance between the protruding portion PTP and the depressed portion DPP may be about 1 *µ*m to about 1,000 *µ*m.

The first side surface SD1, the second side surface SD2, and the third side surface SD3 may have a tolerance of about ±0.5 mm or more. In some embodiments,, the tolerance may be defined as a range in which a difference between an ideal dimension and an actual dimension if (e.g., when) cutting the side surface is allowed in the standard.

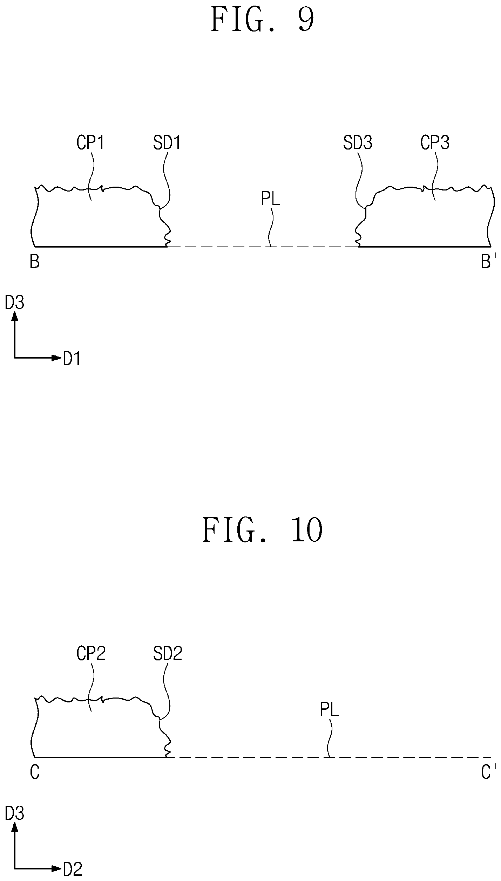

Referring to FIGS. 9-10, each of the first side surface SD1, the second side surface SD2, and the third side surface SD3 may have a convex shape. For example, the first side surface SD1 may have a shape that is convex toward the third side surface SD3. For example, the third side surface SD3 may have a shape that is convex toward the first side surface SD1. For example, the second side surface SD2 may have a convex shape between the first side surface SD1 and the third side surface SD3.

Each of the first side surface SD1, the second side surface SD2, and the third side surface SD3 may have a tilt shape. In some embodiments, each of the first side surface SD1, the second side surface SD2, and the third side surface SD3 may not be perpendicular to a horizontal surface PL. For example, each of the first side surface SD1, the second side surface SD2, and the third side surface SD3 may have an angle of about 90° or more, or about 90° to about 180° from the horizontal surface PL.

The electrode active material may include a positive electrode active material or a negative electrode active material disclosed above.

For example, the binder may be a dry binder. The dry binder may be defined as a binder that is not impregnated, dissolved, or dispersed in a solvent. For example, the dry binder may be a binder that does not contain or contact the solvent.

The dry binder may be, for example, a fibrillized binder. The fibrillized binder may serve as a matrix that supports and adheres to the electrode active material and other components contained in the electrode active material layer. For example, the fibrillized binder may be confirmed to have a fiber form as an scanning electron microscopic image for an electrode cross-section. The fibrillized binder may have, for example, an aspect ratio of about 10 or more, about 20 or more, about 50 or more, or about 100 or more.

The dry binder may include, for example, at least one selected from the group consisting of polytetrafluoroethylene (PTFE), a polyvinylidene fluoride-hexapropylene (PVDF-HFP) copolymer, polyvinylidene fluoride (PVDF), polyvinyl alcohol, polyacrylonitrile, carboxymethylcellulose (CMC), starch, hydroxypropylcellulose, cellulose, polyvinylpyrrolidone, polyethylene, polypropylene, ethylene-propylene-diene polymers (EPDM), sulfonated-EPDM, styrene butadiene rubbers (SBR), fluororubbers, or a copolymers thereof, but is not necessarily limited thereto, and any binder used in the manufacture of the dry electrode may be applicable.

In some embodiments, the dry binder may include a fluorine-based binder. The fluorine-based binder may include, for example, at least one selected from the group consisting of polytetrafluoroethylene (PTFE), a polyvinylidenfluoride-hexapropylene (PVDF-HFP) copolymers, and polyvinylidene fluoride (PVDF).

The conductive material (e.g., the dry conductive material) may be used to provide an electrode with conductivity (e.g., electrical conductivity), and any suitable conductive material without causing chemical change (e.g., that does not cause an undesirable chemical change) of a battery may be used as the conductive material to constitute the battery. The conductive material may include, for example, a carbon-based material, such as natural graphite, artificial graphite, carbon black, acetylene black, Ketjen black, carbon fiber, carbon nano-fiber, and/or carbon nano-tube; a metal powder and/or metal fiber containing one or more selected from among copper, nickel, aluminum, and/or silver; a conductive polymer (e.g., an electrically conductive polymer), such as a polyphenylene derivative; or a mixture thereof.

For example, the conductive material may be a dry conductive material. The dry conductive material may be defined as a conductive material that is not impregnated, dissolved, or dispersed in the solvent. For example, the dry conductive material may be a conductive material that may not include the solvent or may not be in contact with the solvent.

The dry conductive material may include, for example, a carbon-based material, a metal-based material, and/or a (e.g., any suitable) combination thereof. The carbon-based material may include carbon black, graphite fine particles, natural graphite, artificial graphite, acetylene black, ketjen black, carbon fiber, carbon nano-fiber, and carbon nano-tube, but embodiments of the present disclosure are not limited thereto, and any suitable material used as the carbon-based conductive material in the relevant technical fields may be applicable.

A content of the electrode active material, the dry binder, and the dry conductive material may be the same as disclosed above. If (e.g., when) the content of the binder meets the above-disclosed range, binding force of the electrode may be improved, and high energy density of the electrode may be maintained. If (e.g., when) the content of the conductive material meets the above-disclosed range, conductivity (e.g., electrical conductivity) of the electrode may be improved, and the high energy density of the electrode may be maintained.

Referring to FIGS. 11-12, the electrode active material layer according to one or more embodiments of the present disclosure may be a positive electrode active material layer AML1 or a negative electrode active material layer AML2.

In some embodiments, the rechargeable lithium batteries according to one or more embodiments of the present disclosure may include a positive electrode including the positive electrode active material layer AML1 and a negative electrode including the negative electrode active material layer AML2. Each of the positive electrode active material layers AML1 and the negative electrode active material layer AML2 may be an electrode active material layer AML.

For example, the positive electrode active material layer AML1 may include a first coated portion CP1, a second coated portion CP2, and a third coated portion CP3 and may further include a first uncoated portion, which may be an empty space and defined between the first coated portion CP1 and the third coated portion CP3. The first uncoated portion may be adjacent to one side of the second coated portion CP2. The first uncoated portion and the second coated portion CP2 may be between the first coated portion CP1 and the third coated portion CP3. The first uncoated portion may have a first width W1, the second coated portion CP2 may have a second width W2, and each of the first coated portion CP1 and the third coated portion CP3 may have a third width W3. The third width W3 may be the sum of the first width W1 and the second width W2.

For example, the negative electrode active material layer AML2 may include a fourth coated portion CP4, a fifth coated portion CP5, and a sixth coated portion CP6 and may further include a second uncoated portion which may be an empty space and defined between the fourth coated portion CP4 and the sixth coated portion CP6. The second uncoated portion may be adjacent to one side of the fifth coated portion CP5. The second uncoated portion and the fifth coated portion CP5 may be between the fourth coated portion CP4 and the sixth coated portion CP6. The second uncoated portion may have a fourth width W4, the fifth coated portion CP5 may have a fifth width W5, and each of the fourth coated portion CP4 and the sixth coated portion CP6 may have a sixth width W6. The sixth width W6 may be the sum of the fourth width W4 and the fifth width W5.

For example, an area of the positive electrode active material layer AML1 and an area of the negative electrode active material layer AML2 may be different from each other. For example, the area of the negative electrode active material layer AML2 may be greater than the area of the positive electrode active material layer AML1. The positive electrode active material layer AML1 may completely overlap the inside of the negative electrode active material layer AML2.

For example, an area of the coated portion of the negative electrode active material layer AML2 may be greater than an area of the coated portion of the positive electrode active material layer AML1. For example, the total area of the fourth coated portion CP4 to sixth coated portion CP6 of the negative electrode active material layer AML2 may be greater than the total area of the first coated portion CP1 to third coated portion CP3 of the positive electrode active material layer AML1. As a result, the precipitation of a lithium metal, which inhibits safety, may be prevented or reduced, and also, the short circuit may be prevented (or a degree or occurrence thereof may be reduced).

For example, referring to FIG. 11, the fourth width W4 of the second uncoated portion of the negative electrode active material layer AML2 may be less than the first width W1 of the first uncoated portion of the positive electrode active material layer AML1. An area of the second uncoated portion of the negative electrode active material layer AML2 may be less than an area of the first uncoated portion of the positive electrode active material layer AML1. As a result, an area of the coated portion of the negative electrode active material layer AML2 may be greater than an area of the coated portion of the positive electrode active material layer AML1.

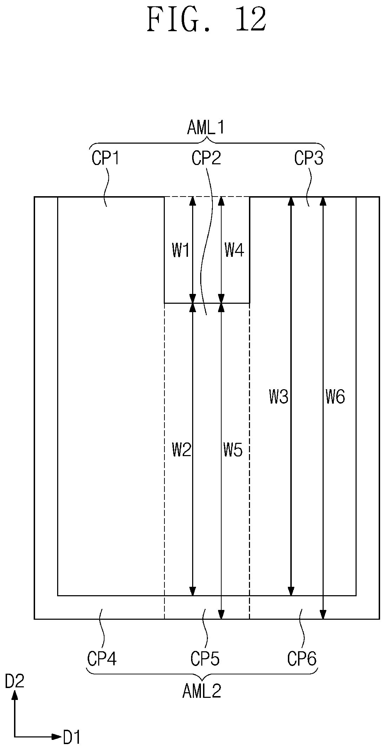

For example, referring to FIG. 12, the fourth width W4 of the second uncoated portion of the negative electrode active material layer AML2 may be substantially the same as the first width W1 of the first uncoated portion of the positive electrode active material layer AML1. However, the fifth width W5 of the fifth coated portion CP5 of the negative electrode active material layer AML2 may be greater than the second width W2 of the second coated portion CP2 of the positive electrode active material layer AML1. As a result, an area of the coated portion of the negative electrode active material layer AML2 may be greater than an area of the coated portion of the positive electrode active material layer AML1.

The electrode active material layer according to one or more embodiments of the present disclosure may have the following effects. The electrode active material layer according to one or more embodiments of the present disclosure may include the coated portion except for the portion, on which the tab is attached, to prevent the mixture from being lost (or reduce loss of the mixture). As a result, the capacity and energy density of the battery including the above-described electrode active material layer may be improved.

### Method for Manufacturing Dry Electrode and Apparatus DEV for Manufacturing Dry Electrode

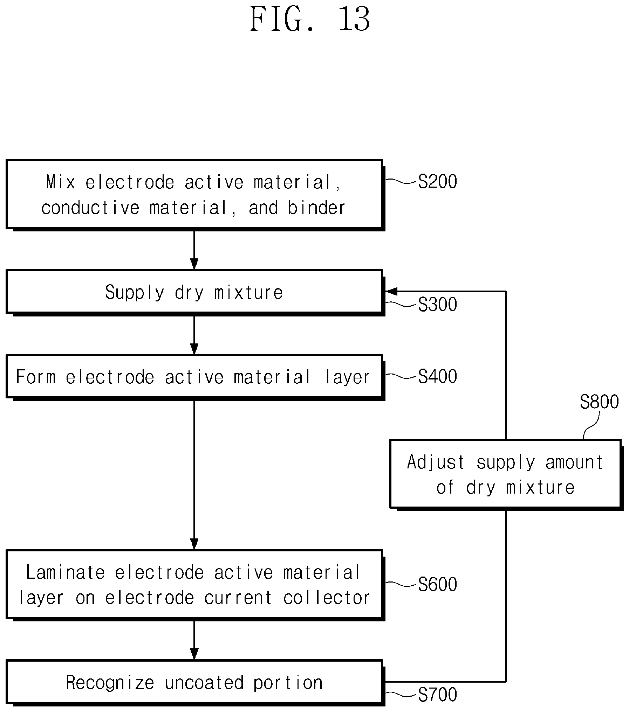

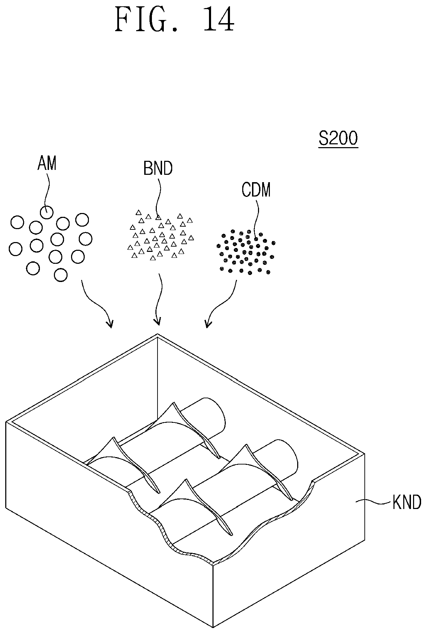

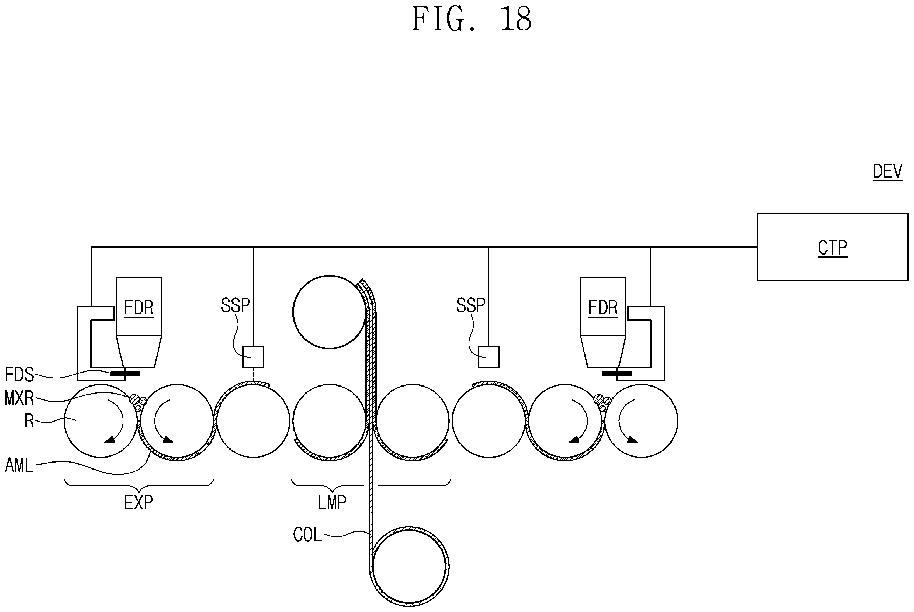

FIG. 13 is a flowchart illustrating a method for manufacturing a dry electrode according to one or more embodiments of the present disclosure. In FIGS. 14-17, each is a perspective view illustrating embodiments of the manufacturing method. In FIGS. 18-19, each is a schematic view illustrating an apparatus for manufacturing the dry electrode according to one or more embodiments of the present disclosure.

Referring to FIG. 13, the method for manufacturing the dry electrode may include mixing an electrode active material, a conductive material (e.g., an electrically conductive material), and a binder to form a dry mixture (S200), supplying the dry mixture (S300), forming a film from the dry mixture to form an electrode active material layer (S400), laminating the electrode active material layer on an electrode current collector (S600), recognizing an uncoated portion (S700), and adjusting a supply amount of dry mixture (S800).

Referring to FIG. 14, the dry mixture may be formed by dry mixing an electrode active material AM, a conductive material CDM (e.g., an electrically conductive material CDM), and a binder BND (S200). The dry mixing means mixing without a process solvent. The process solvent may be a solvent used in production of electrode slurry. The process solvent may be, for example, water and N-methyl-2-pyrrolidone (NMP), but embodiments of the present disclosure are not limited thereto, and there is no limitation as long as it is a process solvent used in the production of the electrode slurry.

Each of the conductive material CDM and the binder BND may be a dry conductive material (e.g., a dry electrically conductive material) and a dry binder, respectively. The electrode active material AM may also be a dry electrode active material.

The dry mixing may be performed, for example, at a temperature of about 25 °C to about 65 °C using an agitator KND. The dry mixing may be performed at a rotational speed of about 10 rpm to about 10,000 rpm or about 100 rpm to about 10,000 rpm using the agitator. The dry mixing may be performed, for example, for about 1 minute to about 200 minutes or about 1 minute to about 150 minutes using the agitator KND.

The agitator KND may be a kneader. The agitator KND may include, for example, a chamber, one or more rotation shafts provided inside the chamber to rotate, and a blade that is rotatably coupled to the rotation shafts and is provided in a longitudinal direction of the rotation shaft. The blade may be, for example, one or more selected from among a ribbon blade, a sigma blade, a jet (Z) blade, a dispersion blade, and/or a screw blade. The blade may be provided to effectively mix the electrode active material AM, the dry conductive material CDM, and the dry binder BND without the solvent. For example, the dry mixture having a dough-like shape may be prepared.

A plasticizer or pores forming agent may be further added to the dry mixture to form a pore inside an electrode plate.

The types/kinds and contents of the electrode active material AM, the conductive material CDM, and the binder BND used in the dry mixture may be as disclosed in one or more embodiments of the present disclosure.

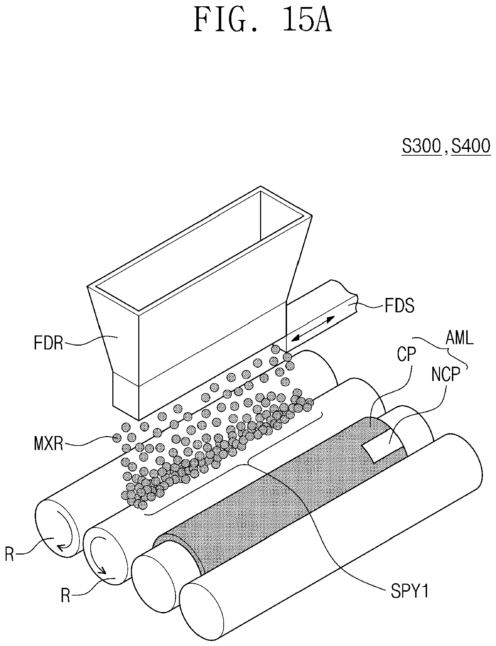

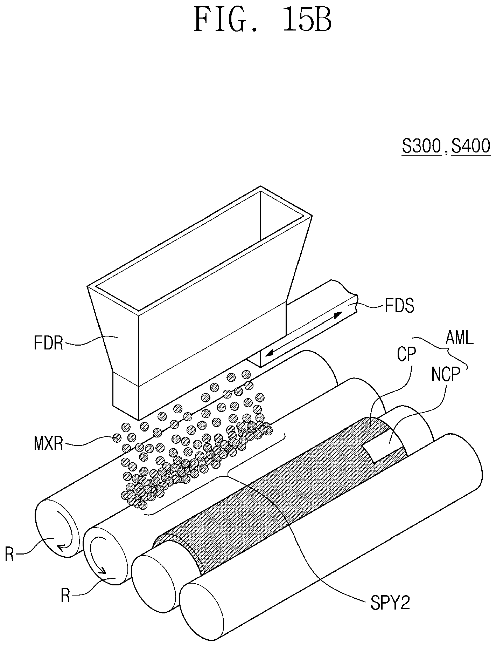

Referring to FIGS. 15A-15B, the dry mixture MXR may be supplied (S300). For example, the dry mixture MXR may be supplied from a dry mixture supply part FDR. For example, the dry mixture supply part FDR may be a feeder.

The dry mixture supply part FDR may include a feeding shutter FDS. The dry mixture supply part FDR may use the feeding shutter FDS to adjust a supply amount of dry mixture MXR.

For example, the feeding shutter FDS may be provided at one side of an opening of the dry mixture supply part FDR, through which the dry mixture is supplied. The feeding shutter FDS may adjust a width of the opening. In some embodiments, the feeding shutter FDS may adjust the width of the opening of the dry mixture supply part FDR to adjust the supply amount of dry mixture MXR. For example, the feeding shutter FDS may move from the outside of the opening to the inside the opening. For example, the feeding shutter FDS may move from the inside of the opening to the outside of the opening.

As an example, the dry mixture supply part FDR may use the feeding shutter FDS to alternately supply the dry mixture MXR at a first supply amount SPY1 and a second supply amount SPY2. The first supply amount SPY1 may be greater than the second supply amount SPY2.

The dry mixture MXR may be utilized to form a film to form an electrode active material layer AML (S400). The dry mixture MXR may, for example, be put from the dry mixture supply part FDR to an extrusion part EXP and then extruded into the form of a sheet or film. As an example, the extrusion part EXP may include a pair of rollers R. The dry mixture MXR may be put between the pair of rollers.

For example, this process may be carried out at conditions of a temperature of about 25 °C to about 150 °C and a pressure of about 3 kiloNewtons (kN) to about 80 kN. Thus, the electrode active material layer AML in the form of the film may be formed.

If (e.g., when) the dry mixture MXR is supplied at the first supply amount SPY1 disclosed in one or more embodiments of the present disclosure and then utilized to form a film, the first coated portion CP1 and the third coated portion CP3, each of which has the third width W3 described above, may be formed. If (e.g., when) the dry mixture MXR is supplied at the second supply amount SPY2 disclosed in one or more embodiments of the present disclosure, the second coated portion CP2 having the second width W2 disclosed in one or more embodiments of the present disclosure may be formed. As a result, the electrode active material layer AML may further include an uncoated potion, which may be an empty area and defined between the first coated portion and the third coated portion. In some embodiments, the electrode active material layer AML including the first coated portion CP1, the second coated portion CP2, the third coated portion CP3, and the uncoated portion may be formed.

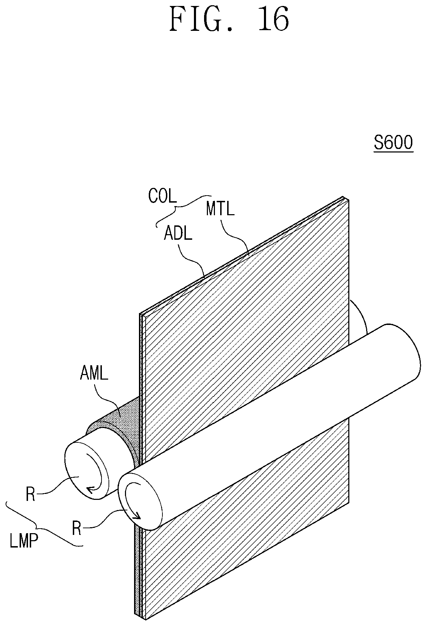

Referring to FIG. 16, the electrode active material layer AML may be laminated on the electrode current collector COL (S600). In some embodiments, a lamination part LMP may laminate the electrode active material layer AML on the electrode current collector COL. This process may include providing the electrode current collector COL. A material of the electrode current collector COL may be as disclosed in one or more embodiments of the present disclosure.

As an example, the providing of the electrode current collector COL may include, for example, providing a metal layer MTL and providing a coating layer ADL on one surface or both surfaces (e.g., two opposing surfaces) of the metal layer MTL. A material of the metal layer MTL may be as disclosed in one or more embodiments of the present disclosure.

The coating layer ADL may be on one surface or both surfaces (e.g., two opposing surfaces) of the metal layer MTL in a dry or wet manner. For example, the coating layer ADL may be on the metal layer MTL in the dry manner by deposition, such as chemical vapor deposition (CVD), physical vapor deposition (PVD), etc. For example, the coating layer ADL may be on the metal layer MTL in the wet manner by spin coating, dip coating, etc. For example, the coating layer ADL may be on the metal layer MTL by depositing a carbon-based conductive material on the metal layer MTL through deposition. The dry-coated coating layer ADL may be made of a carbon-based conductive material and may not include a binder. In some embodiments, the coating layer ADL may be on the metal layer MTL by coating a composition, for example, including the carbon-based conductive material, the binder, and the solvent, on a surface of the metal layer MTL and then drying the composition. The coating layer ADL may have a single-layer structure or a multi-layer structure including a plurality of layers.

An electrode may be manufactured by providing the electrode active material layer AML on one or both sides (e.g., two opposing sides) of the electrode current collector COL. As an example, the electrode may be manufactured by laminating the electrode active material layer AML on the electrode current collector COL. For example, the lamination may use a roll press, a flat press, etc., but embodiments of the present disclosure are not limited thereto.

As an example, the lamination may be performed at a temperature of about 50 °C to about 130 °C and a pressure of about 3 kN to about 40 kN. As a result, the electrode active material layer AML may be in close contact with the electrode current collector COL.

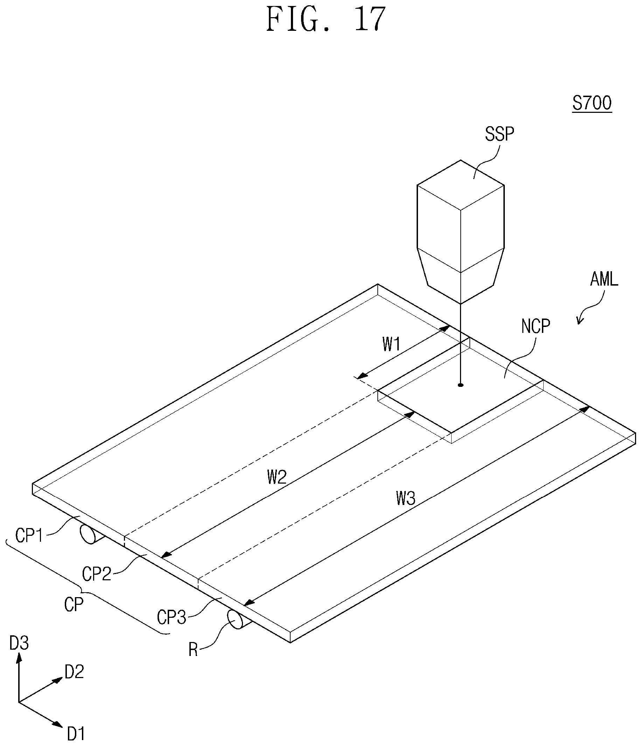

Referring to FIG. 17, the method for manufacturing the dry electrode according to one or more embodiments of the present disclosure may include recognizing the uncoated portion NCP (S700). The sensor part SSP may recognize the uncoated portion NCP of the electrode active material layer AML.

As an example, the recognizing of the uncoated portion NCP may include recognizing the first width W1 of the uncoated portion NCP in a transverse direction TD. In some embodiments, in order to check whether the width of the manufactured uncoated portion NCP in the transverse direction TD has reached a suitable or desired width (e.g., length that is sufficient to attach a tab), the sensor portion SSP may recognize the first width W1 of the uncoated portion NCP in the transverse direction TD. In some embodiments, the first width W1 of the uncoated portion NCP may be a minimum length in the transverse direction TD, at which the sensor part SSP accurately recognizes the uncoated portion without an error. In another embodiment, the first width W1 of the uncoated portion NCP may be greater than the minimum length.

For example, the recognizing of the uncoated portion NCP may include recognizing an area of the uncoated portion NCP. For example, the recognizing of the uncoated portion NCP may include recognizing the first width W1 of the uncoated portion NCP in the transverse direction TD by recognizing the area of the uncoated portion NCP.

As an example, the recognizing of the uncoated portion NCP may include recognizing the coated portions CP1, CP2, and CP3. In some embodiments, the sensor part SSP may recognize the coated portions CP1, CP2, and CP3 and the uncoated portion NCP of the electrode active material layer AML. For example, the sensor part SSP may recognize the widths W2 and W3 of each of the coated portions CP1, CP2, and CP3. In some embodiments, in order to check whether the width of each of the manufactured coated portions CP1, CP2, and CP3 and the uncoated portion NCP in the transverse direction TD has reached the suitable or desired width, the sensor part SSP may recognize the widths W1, W2, and W3 of each of the coated portions CP1, CP2, and CP3 and the uncoated portion NCP in the transverse TD direction.

As an example, the sensor part SSP may include a vision camera. In some embodiments, the vision camera may irradiate light to the electrode active material layer AML to photograph a surface of the electrode active material layer AML. For example, the vision camera may include a camera, a lighting part, etc. As an example, the lighting part may include a plurality of lighting parts.

For example, the recognizing of the uncoated portion NCP (S700) may be performed between the forming of the electrode active material layer (S400) and the laminating of the electrode active material layer on the electrode current collector (S600). As another example, the recognizing of the uncoated portion NCP (S700) may be performed after the laminating of the electrode active material layer on the electrode current collector (S600). As a result, it may be confirmed whether the uncoated portion NCP and/or the coated portions CP1, CP2, and CP3 have the suitable or desired widths W1, W2, and W3, respectively. In some embodiments, good and defective products may be detected in the manufactured electrode active material layers, as disclosed with reference to FIGS. 18-19.

Referring again to FIG. 14, the method for manufacturing the dry electrode according to one or more embodiments of the present disclosure may include adjusting the supply amount of dry mixture (S800). In some embodiments, the method for manufacturing the dry electrode according to one or more embodiments of the present disclosure may include adjusting a supply amount of dry mixture (S800) after the recognizing of the uncoated portion NCP.

For example, if (e.g., when) the first width W1 of the uncoated portion NCP, which is received from the sensor part SSP, is greater than the suitable or desired width, the supply amount of dry mixture MXR from the dry mixture supply part FDR may be reduced. As a result, the first width W1 of the uncoated portion NCP to be manufactured may be reduced.

For example, if (e.g., when) the first width W1 of the uncoated portion NCP, which is received from the sensor part SSP, is less than the suitable or desired width, the supply amount of dry mixture MXR from the dry mixture supply part FDR may increase. As a result, the first width W1 of the uncoated portion NCP to be manufactured may increase.

Referring to FIGS. 18-19, the apparatus DEV for manufacturing the dry electrode of the present disclosure may include a dry mixture supply part FDR, an extrusion part EXP, a lamination part LMP, a sensor part SSP, a roller part R, and a controller CTP. Hereinafter, for the convenience of explanation, the description of the same matters as disclosed by reference to FIGS. 13-17 may be omitted, and difference may be disclosed in detail.

As an example, referring to FIG. 18, the sensor part SSP may be provided between the extrusion part EXP and the lamination part LMP. Thus, the recognizing of the uncoated portion NCP (S700) may be performed between the forming of the electrode active material layer (S400) and the laminating of the electrode active material layer on the electrode current collector (S600). As a result, it may be confirmed whether the uncoated portion NCP and/or the coated portions CP1, CP2, and CP3 have the suitable or desired widths W1, W2, and W3, respectively.

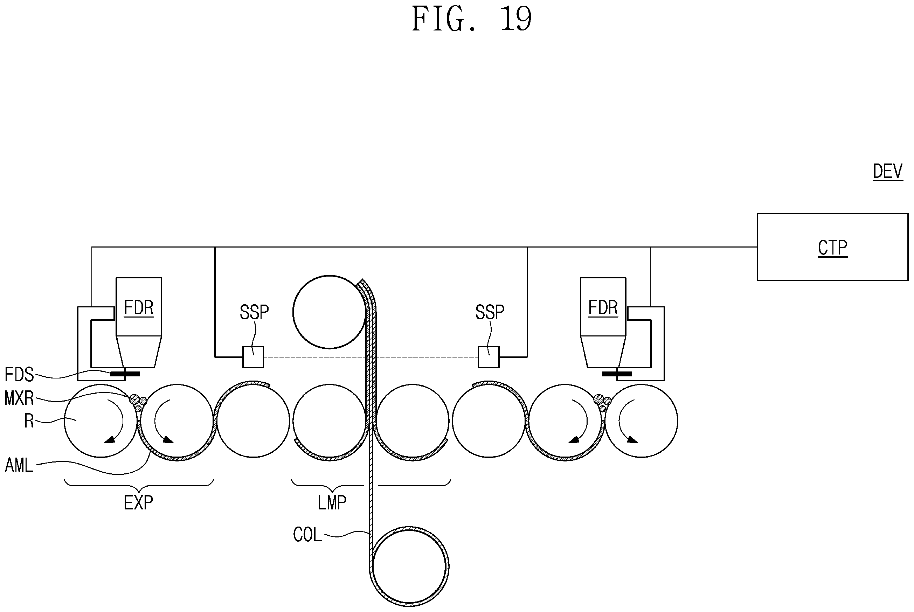

As another example, referring to FIG. 19, the sensor part SSP may be provided behind the lamination part LMP. For example, different configurations may be between the sensor part SSP and the lamination part LMP. Thus, the recognizing of the uncoated portion NCP (S700) may be performed after the laminating of the electrode active material layer on the electrode current collector (S600). As a result, it may be confirmed whether the uncoated portion NCP and/or the coated portions CP1, CP2, and CP3 have the suitable or desired widths W1, W2, and W3, respectively. In some embodiments, good and defective products may be detected in the manufactured electrode active material layers.

The roller part R may include a plurality of rollers (for example, as disclosed in FIGS. 15A, 15B, 16, and 18). The roller part R may transfer the electrode active material layer AML, the electrode current collector COL, etc. The roller part R may continuously (e.g., substantially continuously) perform the process of manufacturing the dry electrode described above.

The controller CTP may receive a recognition signal of the uncoated portion NCP from the sensor part SSP. The controller CTP may control an operation of the feeding shutter FDS. The controller CTP may include a plurality of controllers.

For example, if (e.g., when) the first width W1 of the uncoated portion NCP, which is received from the sensor part SSP, is larger than the suitable or desired width, the controller CTP may control the feeding shutter FDS to move to the inside of the opening of the dry mixture supply part FDR. As a result, the supply amount of dry mixture MXR from the dry mixture supply part FDR may be reduced, and the first width W1 of the uncoated portion NCP to be manufactured may be reduced.

For example, if (e.g., when) the first width W1 of the uncoated portion NCP, which is received from the sensor part SSP, is less than the suitable or desired width, the controller CTP may control the feeding shutter FDS to move to the outside of the opening of the dry mixture supply part FDR. As a result, the supply amount of dry mixture MXR from the dry mixture supply part FDR may increase, and the first width W1 of the uncoated portion NCP to be manufactured may increase.

The apparatus DEV for manufacturing the dry electrode of the present disclosure may further include a notching part. The notching part may notch the electrode. For example, the notching part may notch an edge of the dry electrode. For example, the notching part may notch powder of the dry mixture MXR that has fallen on the uncoated portion NCP. As an example, the notching part may be provided behind the lamination part LMP.

If (e.g., when) the apparatus for manufacturing the dry electrode and the method for manufacturing the dry electrode according to one or more embodiments of the present disclosure are used, the width of the uncoated portion may be freely adjusted. In some embodiments, if (e.g., when) the apparatus for manufacturing the dry electrode and the method for manufacturing the dry electrode according to one or more embodiments of the present disclosure are used, the remaining area except for the area on which the tab is attached may be manufactured as the coated portion during the manufacturing of the electrode active material layer, and also, the dry electrode may be continuously (e.g., substantially continuously) manufactured.

Because the dry electrode according to one or more embodiments of the present disclosure includes the minimized or reduced uncoated portion, the rechargeable lithium battery may be improved in capacity and energy density.

Although embodiments of the present disclosure have been described above with reference to the attached drawings, the present disclosure may be implemented in other specific forms without changing the technical idea or essential features. Therefore, the embodiments described above should be understood as illustrative in all respects and not restrictive.

## Claims

1. An apparatus for manufacturing a dry electrode, comprising:
a dry mixture supply part (FDR) configured to supply a dry mixture (MXR) comprising an electrode active material (AM), a dry binder (BND), and a dry conductive material (CDM), wherein the dry mixture supply part comprises a feeding shutter (FDS) configured to adjust a width of an opening through which the dry mixture is supplied;
an extrusion part (EXP) configured to form an electrode active material layer (AML) comprising a first coated portion (CP1), a second coated portion (CP2), and a third coated portion (CP3) comprising a film formed from the dry mixture, wherein the electrode active material layer further comprises an uncoated portion (NCP), which is an empty area and defined between the first coated portion and the third coated portion;
a lamination part (LMP) configured to laminate the electrode active material layer on an electrode current collector (COL); and
a sensor part (SSP) configured to recognize the uncoated portion,
wherein the uncoated portion is adjacent to one side of the second coated portion, and
the uncoated portion and the second coated portion are between the first coated portion and the third coated portion.

2. The apparatus as claimed in claim 1, wherein the uncoated portion (NCP) has a first width (W1) in a transverse direction (TD),
the second coated portion (CP2) has a second width (W2) in the transverse direction (TD), and
the first coated portion (CP1) has a third width (W3) in the transverse direction (TD), wherein the third width is the sum of the first width and the second width.

3. The apparatus as claimed in claim 1 or claim 2, wherein the feeding shutter (FDS) is provided at one side of the opening of the dry mixture supply part (FDR).

4. The apparatus as claimed in claims 1 to 3, wherein the dry mixture supply part (FDR) is configured to alternately supply the dry mixture (MXR) at a first supply amount and a second supply amount,
wherein the first supply amount is greater than the second supply amount.

5. The apparatus as claimed in claims 1 to 4, wherein the sensor part (SSP) is configured to recognize a first width (W1) of the uncoated portion (NCP) in a transverse direction (TD).

6. The apparatus as claimed in claims 1 to 5, wherein the sensor part (SSP) comprises a vision camera.

7. The apparatus as claimed in claims 1 to 6, wherein the sensor part (SSP) is provided between the extrusion part (EXP) and the lamination part (LMP).

8. The apparatus as claimed in claims 1 to 7, wherein the sensor part (SSP) is provided behind the lamination part (LMP).

9. The apparatus as claimed in claims 1 to 8, further comprising a controller (CTP) configured to receive a recognition signal of the uncoated portion (NCP) from the sensor part (SSP) and control an operation of the feeding shutter (FDS).

10. The apparatus as claimed in claims 1 to 9, further comprising a notching part configured to notch the dry electrode.

11. A method for manufacturing a dry electrode, comprising:
mixing an electrode active material (AM), a dry binder (BND), and a dry conductive material (CDM) to form a dry mixture (MXR);
alternately supplying the dry mixture at a first supply amount and a second supply amount, wherein the first supply amount is greater than the second supply amount;
forming a film from the dry mixture to form an electrode active material layer (AML) comprising a first coated portion (CP1), a second coated portion (CP2), and a third coated portion (CP3), wherein the electrode active material layer further comprises an uncoated portion (NCP), which is an empty area and defined between the first coated portion and the third coated portion;
laminating the electrode active material layer on an electrode current collector (COL);
recognizing the uncoated portion; and
adjusting a supply amount of dry mixture,
wherein the uncoated portion is adjacent to one side of the second coated portion, and
the uncoated portion and the second coated portion are between the first coated portion and the third coated portion.

12. The method as claimed in claim 11, wherein the recognizing of the uncoated portion (NCP) comprises recognizing a first width (W1) of the uncoated portion in a transverse direction (TD).

13. The method as claimed in claim 11 or claim 12, wherein the recognizing of the uncoated portion (NCP) is performed between the forming of the electrode active material layer (AML) and the laminating of the electrode active material layer on the electrode current collector (COL).

14. The method as claimed in claims 11 to 13, wherein the recognizing of the uncoated portion (NCP) is performed after the laminating of the electrode active material layer (AML) on the electrode current collector (COL).

15. A dry electrode comprising:
an electrode current collector (COL); and
an electrode active material layer (AML) on the electrode current collector,
wherein the electrode active material layer comprises an electrode active material (AM), a dry binder (BND), and a dry conductive material (CDM),
the electrode active material layer comprises a first coated portion (CP1), a second coated portion (CP2), and a third coated portion (CP3),
the electrode active material layer further comprises an uncoated portion (NCP), which is an empty area and defined between the first coated portion and the third coated portion,
the uncoated portion is adjacent to one side of the second coated portion, and
the uncoated portion and the second coated portion are between the first coated portion and the third coated portion.
